(19) Europäisches Patentamt
European Patent Office
Office européen des brevets

(11) EP 0 927 727 B1

(12) FASCICULE DE BREVET EUROPEEN

(45) Date de publication et mention de la délivrance du brevet:
**16.04.2003 Bulletin 2003/16**

(51) Int Cl.$^7$: **C08F 4/00**

(21) Numéro de dépôt: **98122812.5**

(22) Date de dépôt: **01.12.1998**

# (54) Procédé de polymerisation radicalaire controlée faisant intervenir une faible quantité de radical libre stable

Verfahren zur kontrollierten Radikalpolymerisation mit Verwendung geringer Mengen eines stabilen Freien Radikalen

Process for controlled radical polymerisation utilizing a low quantity of a stable free radical

(84) Etats contractants désignés:
**AT BE DE ES FI FR GB IT NL SE**

(30) Priorité: **30.12.1997 FR 9716690**

(43) Date de publication de la demande:
**07.07.1999 Bulletin 1999/27**

(73) Titulaire: **Atofina**
**92800 Puteaux (FR)**

(72) Inventeur: **Bertin, Denis**
**76970 Motteville (FR)**

(56) Documents cités:
**EP-A- 0 135 280**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 927 727 B1

## Description

L'invention concerne un procédé de polymérisation ou copolymérisation d'au moins un monomère polymérisable ou copolymérisable par voie radicalaire, en présence d'un radical libre stable et d'un amorceur de polymérisation ou copolymérisation.

La polymérisation radicalaire en présence d'un radical libre stable peut mener à un polymère à la polydispersité étroite. Selon l'art antérieur de fortes concentrations en radical libre stable sont nécessaires à l'obtention d'un tel effet. L'utilisation de telles quantités de radical libre stable est désavantageux sur le plan économique et de plus, peut poser des problèmes de toxicité ou organoleptique en fonction de l'utilisation du polymère ou copolymère final. De plus, ces procédés de l'art antérieur ont des cinétiques très lentes et ne permettent même pas de polymériser ou copolymériser certains monomères comme les méthacrylates. Le procédé selon l'invention offre une réponse aux problèmes sus-mentionnés puisqu'il permet l'utilisation d'une très faible quantité de radical libre stable, tout en menant, avec de fortes vitesses, à des polymères ou copolymères à la polydispersité étroite, et ce, même pour les méthacrylates.

Le procédé selon l'invention permet la préparation de polymères à blocs et de polymères greffés dont les greffons peuvent être des polymères à blocs.

Le procédé selon l'invention comprend une étape de polymérisation ou copolymérisation d'au moins un monomère polymérisable par voie radicalaire, en présence d'un amorceur de polymérisation ou copolymérisation et d'un radical libre stable, ladite étape étant telle que pour 100 moles de monomère,

- si (SFR) représente le nombre de mole de radical libre stable dans le milieu de polymérisation ou copolymérisation,
- si $F_{SFR}$ représente la fonctionnalité du radical libre stable, c'est-à-dire le nombre de sites sur la même molécule de radical libre stable présentant l'état de radical libre stable,
- si (AMO) représente le nombre de mole d'amorceur de polymérisation ou copolymérisation dans le milieu de polymérisation ou copolymérisation,
- si $F_{AMO}$ représente la fonctionnalité de l'amorceur, c'est-à-dire le nombre de sites présentant l'état de radical libre que chaque molécule d'amorceur est capable de générer,

on a les relations :

$$\frac{F_{SFR} \text{ x (SFR)}}{F_{AMO} \text{ x (AMO)}} < 0{,}15$$

et

$$F_{SFR} \text{ x (SFR)} < 0{,}2 \text{ mole.}$$

Comme exemple de radical libre stable dont la fonctionnalité FSFR est égale à 1, on peut citer une molécule représentée par

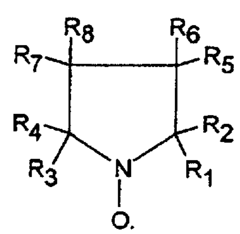

dont les groupements R1, R2, R3, R4, R5, R6, R7 et R8 représentent des radicaux alkyle.

Comme exemple de radical libre stable dont la fonctionnalité $F_{SFR}$ est égale à 2, on peut citer une molécule représentée par :

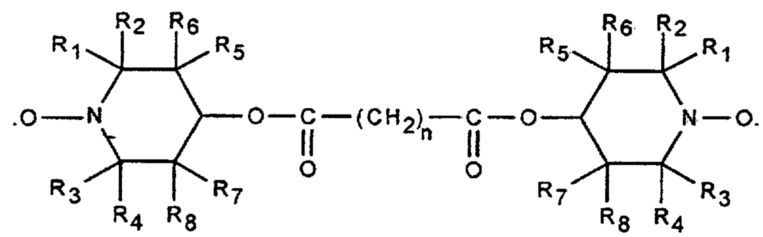

dont les groupements R1, R2, R3, R4, R5, R6, R7, R8 représentent des radicaux alkyle et n représente un nombre entier non nul.

Comme exemple d'amorceur dont la fonctionnalité $F_{AMO}$ est de 2, on peut citer le peroxyde de dicumyle.

Comme exemple d'amorceur dont la fonctionnalité $F_{AMO}$ est de 4, on peut citer le 3,3-di(tert-amylperoxy)-butyrate d'éthyle que l'on peut représenter par :

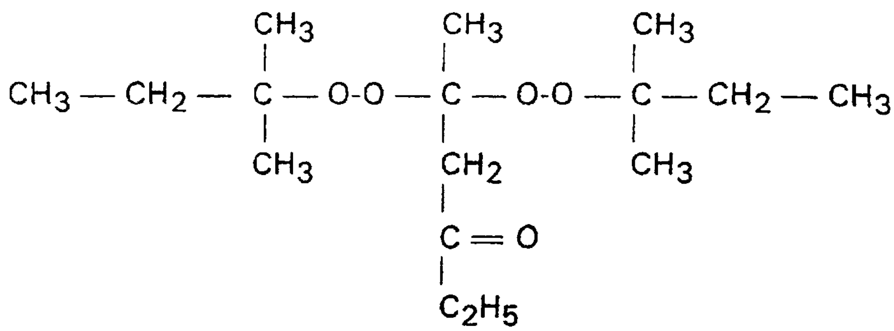

car il contient deux enchaînements — O — O — susceptibles chacun de générer deux sites présentant l'état de radical libre, à savoir — O•.

Bien entendu, on ne sort pas du cadre de la présente invention en introduisant le radical libre stable sous la forme d'une molécule comprenant un groupement capable de générer un radical libre stable lors de l'étape selon l'invention.

Par exemple, pour le cas où l'on introduit dans le cadre de l'étape de l'invention une molécule comprenant un groupement que l'on pourrait représenter par — A — Y, ledit groupement étant capable de générer un radical libre stable Y• lors de l'étape selon l'invention, il faut prendre en compte la totalité des groupements — A — Y introduits au départ, dans le cadre de la détermination de la quantité (SFR) citée plus haut. Toujours dans le cadre de cet exemple, si, simultanément à la formation de Y•, le groupement — A• est amorceur de polymérisation ou copolymérisation, il faut également prendre en compte la totalité des groupements — A — Y introduits au départ dans le cadre de la détermination de la quantité (AMO) citée plus haut.

Comme exemple de groupement générateur de radical libre stable, on peut citer les groupements = N — O — X dont il est question dans le brevet US 4,581,429, ledit groupement étant capable de générer dans le milieu de polymérisation ou copolymérisation un groupement = N — O•, radical libre stable, et un groupement X•, radical libre amorceur de polymérisation d'un monomère M, de façon à former l'enchaînement = N — O — (M)n — X, n représentant un nombre entier non nul.

L'entité = N — O — X est donc un groupement générateur de radical libre stable dont la fonctionnalité $F_{SFR}$ est 1.

L'entité = N — O — X est également un amorceur de polymérisation ou copolymérisation puisqu'il est capable de générer un radical libre amorceur de polymérisation, X•, et sa fonctionnalité d'amorceur $F_{AMO}$ est 1.

De préférence, pour 100 moles de monomère, $F_{AMO}$ x (AMO) va de 0,01 à 20 moles, et de manière encore préférée de 0,1 à 2 moles.

De préférence, pour 100 moles de monomère, $F_{SFR}$ x (SFR) va de 0,0001 à 0,2 et de manière encore préférée de 0,0005 à 0,1.

De préférence,

$$0{,}0005 < \frac{F_{SFR} \times (SFR)}{F_{AMO} \times (AMO)} < 0{,}15$$

De manière encore préférée,

$$0{,}005 < \frac{F_{SFR} \times (SFR)}{F_{AMO} \times (AMO)} < 0{,}1$$

Il est également possible d'avoir

$$0{,}005 < \frac{F_{SFR} \times (SFR)}{F_{AMO} \times (AMO)} < 0{,}05$$

L'étape du procédé selon l'invention peut être menée de 100 à 250°C, et est menée de préférence de 130 à 200°C.

L'étape du procédé selon l'invention peut être menée pendant une durée suffisante en fonction du degré de conversion souhaité de monomère en polymère ou copolymère. Des durées courtes, de l'ordre de 5 minutes à 2 heures, et plus généralement de 15 minutes à à heure peuvent même être obtenues pour des taux de conversion de monomère supérieurs à 50 %, voire même 90 %.

L'étape du procédé selon l'invention peut être menée en présence d'un solvant, mais également avec très peu de solvant, voire en l'absence de solvant. A titre d'exemple, le solvant peut être présent à raison de 0 à 50 %, voire 0 à 20 % et même 0 à 10 % en poids de la somme de la masse de monomère et de solvant. Par solvant, on entend généralement un liquide inerte vis-à-vis du milieu réactionnel, solubilisant au moins partiellement dans les conditions de polymérisation ou copolymérisation au moins partiellement au moins un monomère et/ou polymère ou copolymère. Généralement, si nécessaire, on utilise un solvant organique tel qu'un aromatique comme le toluène, xylène, benzène, éthylbenzène ou un solvant aliphatique ou alicyclique comme le cyclohexane, l'hexane, l'heptane, ou un éther tel que le diphényléther.

Le procédé selon l'invention permet la préparation de copolymères à blocs. En effet, la polymérisation d'un premier monomère par le procédé selon l'invention mène à un bloc de polymère vivant. Il est alors possible d'accoler à ce premier bloc, un bloc d'un autre polymère en plaçant le premier bloc de polymère vivant dans un milieu de polymérisation d'un second monomère. Il est ainsi possible de réaliser des copolymères à blocs, par exemple, des copolymères comprenant un ou plusieurs blocs de polystyrène et un ou plusieurs blocs de polybutadiène, ou des copolymères comprenant un ou plusieurs blocs de polystyrène et un ou plusieurs blocs du type méthacrylate.

Bien entendu, il est possible d'accoler autant de blocs que l'on souhaite au polymère vivant en plaçant celui-ci dans un milieu de polymérisation d'un monomère dont on souhaite constituer un bloc.

Ainsi, l'invention concerne également un procédé de préparation d'un polymère à blocs comprenant au moins une étape selon l'invention, menant à une premier bloc vivant, ledit bloc vivant étant ensuite placé en présence d'au moins un autre monomère dont on souhaite constituer un bloc accolé au premier bloc, de façon à former un dibloc vivant, et ainsi de suite, suivant le nombre de blocs que l'on souhaite réaliser.

Ainsi, la présente demande concerne également un procédé de préparation d'un polymère dibloc comprenant une étape de polymérisation d'un premier monomère conformément à l'invention, de façon à obtenir un premier bloc vivant, suivie d'une étape au cours de laquelle le premier bloc vivant est placé en présence d'un second monomère que l'on polymérise de façon à former un second bloc accolé au premier bloc.

La présente demande concerne donc également un procédé de préparation d'un polymère tribloc comprenant une étape de polymérisation d'un troisième monomère en présence du polymère dibloc préparé conformément à ce qui vient d'être dit, de façon à former un troidième bloc accolé au polymère dibloc.

La formation de chaque bloc peut être réalisée à une température différente. Cependant, entre la formation de deux blocs, il est préférable de ne pas faire baisser la température du milieu à une température inférieure à la plus basse des températures utilisées pour la formation de chacun des deux blocs. De préférence, la température du milieu est maintenue à au moins 100°C pendant tout le processus de formation des blocs, c'est-à-dire pendant la formation des blocs, mais aussi entre leur formation.

A titre d'exemple, les polymères à blocs suivants peuvent être réalisés :

polystyrène-b-polyméthacrylate de méthyle,
polystyrène-b-polystyrènesulfonate,

polystyrène-b-polyacrylamide,
polystyrène-b-polyméthacrylamide,
polyméthacrylate de méthyle-b-polyacrylate d'éthyle,
polystyrène-b-polyacrylate de butyle,
polybutadiène-b-polyméthacrylate de méthyle,
polyisoprène-b-polystyrène-co-acrylonitrile,
polybutadiène-b-polystyrène-co-acrylonitrile,
polystyrène-co-acrylate de butyle-b-polyméthacrylate de méthyle,
polystyrène-b-polyacétate de vinyle,
polystyrène-b-polyacrylate de 2-hexyléthyle,
polystyrène-b-polyméthacrylate de méthyle-co-acrylate d'hydroxyéthyle,
polystyrène-b-polybutadiène-b-polyméthacrylate de méthyle,
polybutadiène-b-polystyrène-b-polyméthacrylate de méthyle,
polystyrène-b-polyacrylate de butyle-b-polystyrène,
polystyrène-b-polybutadiène-b-polystyrène,
polystyrène-b-polyisoprène-b-polystyrène.

Grâce à la possibilité d'utiliser pas ou peu de solvant, le procédé selon l'invention peut par exemple être mené en extrudeuse. Il est ainsi possible de réaliser un polymère ou copolymère dans l'extrudeuse de façon à aboutir en fin d'extrusion à un produit transformé sous la forme par exemple de granulés, profilés, tubes, feuilles, films, plaques.

Un polymère à blocs peut être réalisé au moins partiellement, voire entièrement dans l'extrudeuse. Dans ce cas, on peut par exemple procéder selon l'une des deux façons suivantes :

1. on prépare un premier bloc vivant d'un monomère dans un réacteur conformément au procédé selon l'invention. On introduit alors ce premier bloc dans l'extrudeuse ainsi que le deuxième type de monomère que l'on souhaite juxtaposer au premier bloc, en tant que second bloc. La copolymérisation par formation, du second bloc est réalisée dans l'extrudeuse.
2. on introduit un premier monomère en tête d'extrudeuse et on le polymérise dans la première partie de l'extrudeuse, conformément au procédé selon l'invention. Le second monomère est alors introduit en cours d'extrusion du premier bloc de monomère et la copolymérisation par formation du second bloc est réalisée dans la seconde partie de l'extrudeuse.

Bien entendu, l'invention n'est pas limitée à la formation d'homopolymères, de copolymères statistiques ou de copolymères diblocs. Des copolymères comprenant plus de deux blocs peuvent également être réalisés, par exemple en réalisant sur une extrudeuse autant d'entrées de monomères que l'on souhaite insérer de blocs dans le copolymère final.

Si on le souhaite, toutes les étapes de polymérisation menant au polymère à bloc peuvent donc être menées en extrudeuse.

Le procédé selon l'invention permet la préparation de polymères greffés avec des greffons de nature homopolymère ou polymère à blocs. En effet, la polymérisation d'un monomère en présence d'un radical libre stable et d'un macroamorceur de polymérisation mène à un bloc de polymère vivant greffé sur la chaîne de polymère du macroamorceur initial. On entend en effet par macroamorceur un polymère dont au moins un atome est capable de prendre une forme radicalaire dans les conditions de formation dudit bloc, ladite forme radicalaire étant capable d'amorcer la polymérisation du monomère destiné à former ledit bloc. De tels macromaorceurs sont décrits dans la demande de brevet français déposée sous le numéro 97 13383. Le bloc ainsi formé est vivant car il présente en son extrêmité un groupement capable de générer le radical libre stable. Il est ainsi possible d'accoler à ce premier bloc, un second bloc en plaçant le polymère greffé par le premier bloc en présence d'un autre monomère de façon à polymériser ce dernier à la suite du premier bloc. A l'issue de la formation de ce second bloc, le polymère apparaît greffé par un copolymère dibloc et présente toujours en son extrêmité un groupement capable de générer le radical libre stable.

Bien entendu, il est possible d'accoler autant de blocs que l'on souhaite au polymère vivant en plaçant celui-ci dans un milieu de polymérisation d'un monomère dont on souhaite constituer un bloc.

Ainsi, l'invention concerne également un procédé de préparation d'un polymère greffé comprenant au moins une étape selon l'invention menant à un polymère greffé par un premier bloc vivant, ledit bloc vivant étant ensuite placé en présence d'au moins un autre monomère dont on souhaite constituer un bloc accolé au premier bloc, de façon à former un polymère greffé par un dibloc vivant, et ainsi de suite, suivant le nombre de blocs que l'on souhaite réaliser pour le greffon.

La formation de chaque bloc peut être réalisée à une température différente. Cependant, entre la formation de deux blocs, il est préférable de ne pas faire baisser la température du milieu à une température inférieure à la plus

basse des températures utilisées pour la formation de chacun des deux blocs. De préférence, la température du milieu est maintenue à au-moins 100°C pendant tout le processus de formation des blocs, c'est-à-dire pendant la formation des blocs, mais aussi entre leur formation.

A titre d'exemple, on peut réaliser les copolymères greffés suivants :

polyéthylène-g-polystyrène,
polyéthylène-g-polyméthacrylate de méthyle,
polyéthylène-g-polystyrène-co-acrylonitrile),
polyéthylène-g-poly(styrène-co-acrylate d'hydroxyéthyle),
polyéthylène-g-(polystyrène-b-polyméthacrylate de méthyle),
polypropylène-g-polystyrène,
polypropylène-g-polyméthacrylate de méthyle,
polypropylène-g-poly(styrène-co-acrylonitrile),
polypropylène-g-(polystyrène-b-polyméthacrylate de méthyle),
poly(éthylène-co-méthacrylate de glycidyle)-g-polystyrène,
poly(styrène-co-acrylonitrile),
polypropylène-g-(polystyrène-b-polyméthacrylate de méthyle),
poly(éthylène-co-méthacrylate de glycidyle)-g-polystyrène,
poly(éthylène-co-méthacrylate de glycidyle)-g-polyméthacrylate de méthyle,
poly(éthylène-co-méthacrylate de glycidyle)-g-poly(styrène-co-acrylonitrile),
poly(éthylène-co-acrylate d'éthyle)-g-polystyrène,
poly(éthylène-co-acrylate d'éthyle)-g-polyméthacrylate de méthyle,
poly(éthylène-co-acrylate d'éthyle)-g-poly(styrène-co-acrylonitrile),
poly(éthylène-co-acétate de vinyle)-g-polystyrène,
poly(éthylène-co-acrylate d'éthyle)-g-polyméthacrylate de méthyle,
poly(éthylène-co-acrylate d'éthyle)-g-polystyrène-co-acrylonitrile),
poly(éthylène-co-acrylate d'éthyle-co-anhydride maléique)-g-polystyrène,
poly(éthylène-co-acrylate d'éthyle-co-anhydride maléique)-g-polyméthacrylate de méthyle,
poly(éthylène-co-acrylate d'éthyle-co-anhydride maléique)-g-poly(styrène-co-acrylonitrile),
poly(éthylène-co-acrylate de butyle)-g-polystyrène,
poly(éthylène-co-acrylate de butyle)-g-polyméthacrylate de méthyle,
poly(éthylène-co-acrylate de butyle)-g-poly(styrène-co-acrylonitrile),
poly(éthylène-co-acrylate d'éthyle-co-méthacrylate de glycidyle)-g-polystyrène,
poly(éthylène-co-acrylate d'éthyle-co-méthacrylate de glycidyle)-g-polyméthacrylate de méthyle,
poly(éthylène-co-acrylate d'éthyle-co-méthacrylate de glycidyle)-g-poly(styrène-co-acrylonitrile),
polycarbonate-g-polystyrène,
polycarbonate-g-polyméthacrylate de méthyle,
polycarbonate-g-poly(styrène-co-acrylonitrile).

Ici également, la formation du polymère greffé peut être réalisée au moins partiellement, voire entièrement, en extrudeuse. Si on le souhaite, toutes les étapes de polymérisation menant au polymère greffé peuvent être réalisées en extrudeuse.

il ne faut pas confondre un radical libre stable avec les radicaux libres dont la durée de vie est éphémère (quelques millisecondes) comme les radicaux libres issus des amorceurs habituels de polymérisation comme les peroxydes, hydroperoxydes et amorceurs de type azoïques. Les radicaux libres amorceurs de polymérisation tendent à accélérer la polymérisation. Au contraire, les radicaux libres stables tendent généralement à ralentir la polymérisation. On peut généralement dire qu'un radical libre est stable au sens de la présente invention s'il n'est pas amorceur de polymérisation et si, dans les conditions d'utilisation de la présente invention, la durée moyenne de vie du radical est d'au moins cinq minutes. Au cours de cette durée moyenne de vie, les molécules du radical libre stable alternent en permanence l'état de radical et l'état de groupement lié par une liaison covalente à une chaîne de polymère. Bien entendu, il est préférable que le radical libre stable présente une bonne stabilité pendant toute la durée de son utilisation dans le cadre de la présente invention. Généralement, un radical libre stable peut être isolé à l'état de radical à la température ambiante.

Il est rappelé que la notion de radical libre stable est connue de l'homme du métier pour désigner un radical tellement persistant et non réactif vis-à-vis de l'air et de l'humidité dans l'air ambiant, que le radical pur peut être manipulé et stocké sans plus de précautions à la température ambiante que le sont la majorité des produits chimiques commerciaux (voir à ce sujet D. Griller et K. Ingold, Accounts of Chemical Research, 1976, 9, 13-19, ou Organic Chemistry of Stable Free Radicals, A. Forrester et coll., Academic Press, 1968).

La famille des radicaux libres stables inclut notamment les composés agissant comme inhibiteurs de polymérisation radicalaire, les radicaux nitroxydes stables c'est-à-dire comprenant le groupement = N-O•. On peut utiliser comme radical libre stable par exemple les radicaux représentés par les formules suivantes:

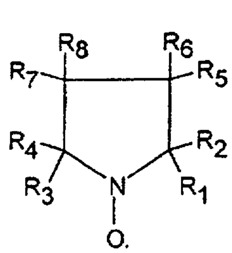
,
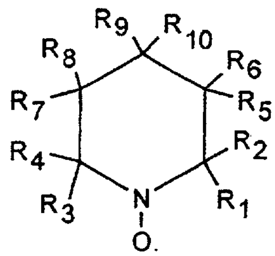
,
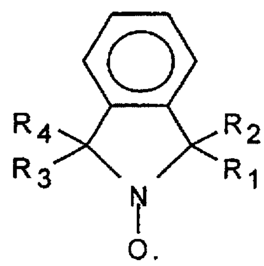
,

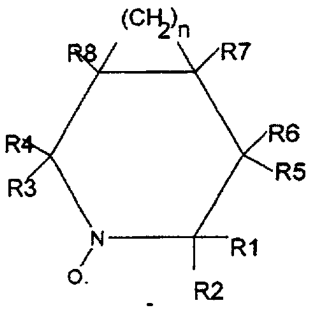
-
,
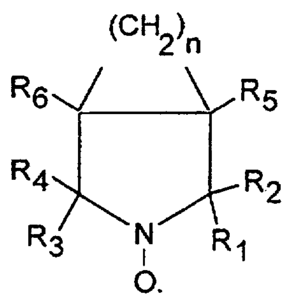
,
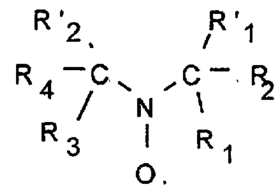

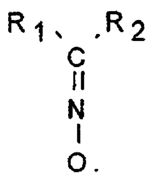
,
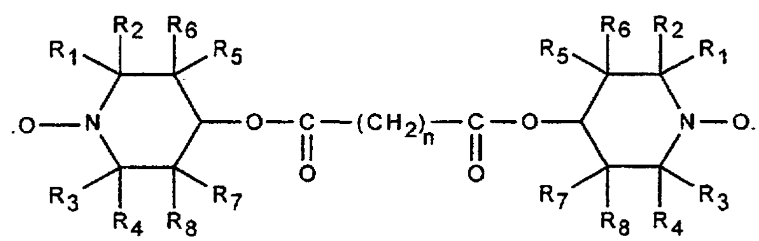
,

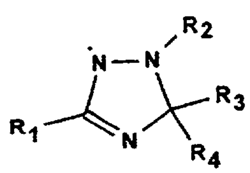

dans lesquelles n représente un nombre entier non nul et R1, R2, R3, R4, R'1 et R'2 pouvant être identiques ou différents représentent un atome d'halogène tel que le chlore, le brome ou l'iode, un groupement hydrocarboné linéaire, ramifié ou cyclique, saturé ou insaturé tels qu'un radical alkyle ou phényle, ou un groupement ester -COOR ou un groupement alcoxyle -OR, ou un groupement phosphonate $-PO(OR)_2$, ou une chaîne de polymère pouvant par exemple être une chaîne de polyméthacrylate de méthyle, de polybutadiène, de polyoléfine comme de polyéthylène ou de polypropylène, mais étant de préférence une chaîne de polystyrène, et dans lesquelles R5, R6, R7, R8, R9 et R10, pouvant être identiques ou différent, peuvent être choisis dans la même famille de groupement que celle qui vient d'être envisagée pour R1, R2, R3, R4, R'1 et R'2, et de plus peuvent représenter un atome d'hydrogène, un groupement hydroxyde -OH, un groupement acide tel que -COOH ou $-PO(OH)_2$ ou $-SO_3H$.

En particulier, le radical libre stable peut être le 2,2,5,5-tétraméthyl-1-pyrrolidinyloxy commercialisé sous la marque PROXYL ou le 2,2,6,6-tetraméthyl-1-piperidinyloxy, généralement commercialisé sous la dénomination TEMPO.

Le radical libre stable peut également être choisi dans la liste suivante

- N-tertiobutyl-1-phényl-2 méthyl propyl nitroxyde,
- N-tertiobutyl-1-(2-naphtyl)-2-méthyl propyl nitroxyde,
- N-tertiobutyl-1-diéthylphosphono-2,2-diméthyl propyl nitroxyde,
- N-tertiobutyl-1-dibenzylphosphono-2,2-diméthyl propyl nitroxyde,
- N-phényl-1-diéthyl phosphono-2,2-diméthyl propyl nitroxyde,
- N-phényl-1-diéthyl phosphono-1-méthyl éthyl nitroxyde,
- N-(1-phényl 2-méthyl propyl)-1-diéthylphosphono-1-méthyl éthyl nitroxyde,
- 4-hydroxy-2,2,6,6-tétraméthyl-1-piperidinyloxy,
- 4-oxo-2,2,6,6-tétraméthyl-1-piperidinyloxy,
- 2,4,6-tri-tert-butylphenoxy.

L'amorceur est un amorceur de polymérisation ou copolymérisation radicalaire. Cet amorceur est de préférence choisi de sorte que son temps de demi-vie à la température choisie pour l'étape du procédé selon l'invention va de 30 secondes à 1 heure,et de préférence de 5 minutes à 30 minutes.

L'amorceur peut par exemple être choisi parmi les peroxydes de diacyle, les peroxyesters, les peroxydes de dialkyle, les peroxyacétals.

L'amorceur peut par exemple être choisi dans la liste suivante :

- peroxyde de dibenzoyle,
- peroxyde de di-O-méthylbenzoyle,
- peroxyde de di-3,5,5-triméthylhexanoyle,
- peroxyde de didecanoyle,
- peroxyde de dilauroyle,
- peroxybenzoate de tert-butyle,
- peroxy-3,5,5-triméthylhexanoate de tert-butyle,
- 2,5-diméthyl-2,5di-(benzoyl peroxy)-hexane,
- monoperoxycarbonate de 00-tert-butyle et de O-isopropyle,
- monoperoxycarbonate de 00-tert-butyle et de O-(2-éthylhexyle),
- peroxy-3,5,5-triméthylhexanoate de tert-amyle,
- peroxy-2-éthyl-hexanoate de tert-butyle,
- peroxy-2-éthyl-hexanoate de tert-amyle,
- peroxypivalate de tert-butyle,
- peroxypivalate de tert-amyle,
- peroxy-néodécanoate de tert-butyle,
- peroxy-néodécanoate de tert-amyle,
- peroxy-néodécanoate de $\alpha$-cumyle,
- peroxy-néodécanoate de 3-hydroxy-1,1-diméthylbutyle,
- 2,5-diméthyl-2,5-di(tert-butylperoxy)-hexane,
- 2,5-diméthyl-2,5-di(tert-butylperoxy)-hex-(3)-yne,
- peroxyde de tert-butyle et de cumyle,
- peroxyde de dicumyle,
- peroxyde de di-tert-butyle,
- 1,1-di(tert-butylperoxy)-3,3,5-triméthylcyclohexane,
- 1,1-di(tert-butylperoxy)-cyclohexane,
- 2,2-di(tert-butylperoxy)-butane,
- n-butyl 4,4-di(tert-butylperoxy)-valerate,
- 3,3-di(tert-butylperoxy)-butyrate d'éthyle,
- 3,3-di(tert-amylperoxy)-butyrate d'éthyle,

Par monomère, on entent tout monomère polymérisable ou copolymérisable par voie radicalaire.

Le monomère peut être choisi parmi les monomère vinyliques, vinylidéniques, diéniques et oléfiniques, allyliques.

Par monomères vinyliques, on entend les (méth)acrylates, les monomères vinylaromatiques, les esters vinyliques, le (méth)acrylonitrile, le (méth)acrylamide et les mono- et di-(alkyl en $C_1$-$C_{18}$)-(méth)acrylamides, et les monoesters et diesters de l'anhydride maléique et de l'acide maléique.

Les (méth)acrylates sont en particulier ceux des formules respectivement :

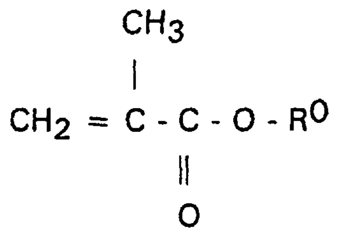

et

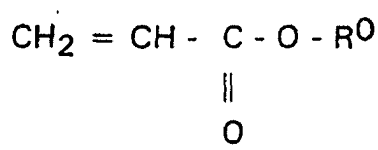

dans lesquelles $R^0$ est choisi parmi les radicaux alkyle en $C_1$-$C_{18}$, linéaires ou ramifiés, primaires, secondaires ou tertiaires, cycloalkyle en $C_5$-$C_{18}$, (alcoxy en $C_1$-$C_{18}$)-alkyle en $C_1$-$C_{18}$, (alkylthio en $C_1$-$C_{18}$)-alkyle en $C_1$-$C_{18}$, aryle et arylalkyle, ces radicaux étant éventuellement substitués par au moins un atome d'halogène et/ou au moins un groupe hydroxyle après protection de ce groupe hydroxyle, les groupes alkyle ci-dessus étant linéaires ou ramifiés ; et les (méth)acrylates de glycidyle, de norbornyle, d'isobornyle.

Comme exemples de méthacrylates utiles, on peut citer les méthacrylates de méthyle, d'éthyle, de 2,2,2-trifluoroéthyle, de n-propyle, d'isopropyle, de n-butyle, de sec.-butyle, de tert.-butyle, de n-amyle, d'i-amyle,de n-hexyle, de 2-éthylhexyle, de cyclohexyle, d'octyle, d'i-octyle, de nonyle, de décyle, de lauryle, de stéaryle, de phényle, de benzyle, de β-hydroxy-éthyle, d'isobornyle, d'hydroxypropyle, d'hydroxybutyle.

Comme exemples d'acrylates de la formule ci-dessus, on peut citer les acrylates de méthyle, d'éthyle, de n-propyle, d'isopropyle, de n-butyle, de sec.-butyle, de tert.-butyle d'hexyle, de 2-éthylhexyle, d'isooctyle, de 3,3,5-triméthylhexyle, de nonyle, d'isodécyle, de lauryle, d'octadécyle, de cyclohexyle, de phényle, de méthoxyméthyle, de méthoxyéthyle, d'éthoxyméthyle et d'éthoxyéthyle.

Par monomère vinylaromatique au sens de la présente invention, on entend un monomère aromatique à insaturation éthylénique tel que le styrène, le vinyltoluène, l'alphaméthylstyrène, le méthyl-4-styrène, le méthyl-3-styrène, le méthoxy-4-styrène, l'hydroxyméthyl-2-styrène, l'éthyl-4-styrène, l'éthoxy-4-styrène, le diméthyl-3,4-styrène, le chloro-2-styrène, le chloro-3-styrène, le chloro-4-méthyl-3-styrène, le tert.-butyl-3-styrène, le dichloro-2,4-styrène, le dichloro-2,6-styrène et le vinyl-1-naphtalène. Comme esters vinyliques, on peut citer l'acétate de vinyle, le propionate de vinyle, le chlorure de vinyle et le fluorure de vinyle.

Comme monomère vinylidénique, on cite le fluorure de vinylidène.

Par monomère diénique, on entend un diène choisi parmi les diènes linéaires ou cycliques, conjugués ou non-conjugués comme par exemple le butadiène, le 2,3-diméthyl-butadiène, l'isoprène, le 1,3-pentadiène, le 1,4-pentadiène, le 1,4-hexadiène, le 1,5-hexadiène, le 1,9-décadiène, le 5-méthylène-2-norbornène, le 5-vinyl-2-norbonène, les 2-alkyl-2,5-norbonadiènes, le 5-éthylène-2-norbornène, le 5-(2-propényl)-2-norbornène, le 5-(5-héxényl)-2-norbornène, le 1,5-cyclooctadiène, le bicyclo[2,2,2]octa-2,5-diène, le cyclopentadiène, le 4,7,8,9-tétrahydroindène et l'isopropylidène tétrahydroindène.

Comme monomère oléfiniques, on peut citer l'éthylène, le butène, l'hexène et le 1-octène. Les monomères oléfiniques fluorés peuvent également être cités.

## EXEMPLE 1

### PREPARATION D'UN HOMOPOLYSTYRENE EN PRESENCE DE TEMPO.

Dans un ballon en verre de 100 ml sous atmosphère d'azote, muni d'une agitation mécanique et d'un système de régulation thermique, sont introduits à température ambiante :

- 40 g de styrène (soit 0,385 mole),
- 0,21 g de peroxyde de dicumyle, (soit $7,7.10^{-4}$ mole),
- 0,024 g de 2,2,6,6-tetraméthyl-1-piperidinyloxy (soit $1.53.10^{-4}$ mole de Tempo),

Le mélange réactionnel est ensuite porté à 143°C. L'instant pour lequel le mélange réactionnel atteint la température de 143°C est défini comme l'instant de départ de l'essai. Au bout de 40 min, 90 % de conversion sont obtenus. Le pourcentage de conversion correspond au % de monomère converti en polymère et est calculé par spectroscopie RMN du proton avec intégration des pics correspondant au polymère et au monomère, et par pesée du polymère obtenu.

Le polystyrène final, après purification, à une masse moléculaire moyenne en nombre de 35 000 et un indice de polymolécularité de 1,8. L'étape de purification consiste à solubiliser le polystyrène dans du THF (environ dix fois

la masse de polystyrène) et de précipiter la solution dans 100 volumes de méthanol. La poudre obtenue est filtrée puis séchée. La masse moléculaire moyenne en nombre (notée Mn) est déterminée par chromatographie à perméation de gel (GPC) dans le THF, après étalonnage avec des échantillons standards de polystyrènes et l'indice de polymolécularité (noté Ip) est le rapport de la masse moléculaire moyenne en poids sur la masse moléculaire moyenne en nombre, toutes deux mesurées par GPC.

**EXEMPLE 2** (COMPARATIF)

**PREPARATION D'UN HOMOPOLYSTYRENE EN ABSENCE DE TEMPO.**

On procède comme pour l'exemple 1, sauf que l'on ne met pas de Tempo. Aux mêmes conditions de polymérisation, après 40 min de réaction, 90 % de conversion sont obtenus et le polystyrène synthétisé à un Mn de 39500 et un indice de polymolécularité de 2,2.

**EXEMPLE 3**

**SYNTHESE DE COPOLYMERES A BLOCS POLYSTYRENE-b-POLYACRYLATE DE N-BUTYLE.**

Dans un ballon en verre de 100 ml sous atmosphère d'azote, muni d'une agitation mécanique et d'un système de régulation thermique, sont introduits à température ambiante :

- 20 g de styrène (soit 0,192 mole),
- 0,216 g de peroxyde de dicumyle (soit $8.10^{-4}$ . mole),
- 0,0245 g de Tempo (soit $1,57.10^{-4}$ mole).

Le mélange réactionnel est ensuite porté à 143°C. L'instant pour lequel le mélange réactionnel atteint la température de 143°C est défini comme l'instant de départ de l'essai. Au bout de 35 min un prélèvement est réalisé et analysé : le taux de conversion est de 90 % et le polystyrène a un Mn de 21000 et un indice de polymolécularité de 1,8.

Tout en maintenant la température du mélange réactionnel à 143°C, 30 g d'acrylate de butyle sont additonnés. Au fur et à mesure de l'avancement de réaction, la viscosité du mélange augmente. Au bout de 20 min de réaction, le mélange réactionnel est pris en masse ce qui implique l'arrêt de la polymérisation. Un prélèvement est ensuite réalisé afin d'être analysé par GPC.

Ensuite, le mélange réactionnel est solubilisé dans du THF (dans environ 10 fois la masse de polymère obtenu) puis est précipité dans 100 volumes de méthanol. Le copolymère obtenu présente un Mn de 32 000 et un indice de polymolécularité de 3. Le chromatogramme GPC est monomodal sans épaulement. De plus, le chromatogramme GPC est décalé vers les fortes masses si on le compare à celui obtenu juste avant l'ajout d'acrylate de butyle. Ces deux éléments montrent bien qu'il y a eu copolymérisation.

**EXEMPLE 4**

**SYNTHESE DE COPOLYMERES A BLOCS PS-b-PABu.**

On procède comme pour l'exemple précédent excepté le fait qu'il y a deux fois moins d'amorceur et de radical libre stable (Tempo) par rapport au monomère. Le copolymère final présente un Mn de 57 000 et un Ip de 2,7. La courbe GPC est monomodale sans épaulement. De plus, il est décalé vers les fortes masses si on le compare à celui obtenu juste avant l'ajout d'acrylate de butyle, ce qui montre qu'il y a bien eu copolymérisation.

L'analyse par calorimétrie différencielle (DSC pour "Differential Scanning Calorimetric") montre la présence de deux températures de transition vitreuse à -45°C et à 95°C, caractérisant respectivement le bloc de polyacrylate de butyle et le bloc de polystyrène.

**EXEMPLE 5** (COMPARATIF)

On procède comme pour l'exemple 3, sauf que l'on ne met pas de Tempo.

Le copolymère final présente un Mn de 27 000 et un Ip de 5,4. La courbe GPC est bimodale et l'un de ses pics est identique à celui obtenu avant la tentative de réalisation du bloc de polyacrylate de butyle. Ceci indique qu'il n'y a pas eu copolymérisation et que le produit finalement obtenu n'est qu'un mélange de deux homopolymères.

**EXEMPLE 6**

On procède comme pour l'exemple 4, sauf que l'on remplace l'acrylate de butyle par le même nombre de mole de méthacrylate de butyle, et saut que l'étape de purification est réalisée dans l'hexane.

Le copolymère final présente un Mn de 52 000 et un Ip de 1,9. L'analyse par GPC indique qu'il y a bien eu copolymérisation. L'analyse par DSC montre la présence de deux températures de transition vitreuse à 35°C et 95°C, caractérisant respectivement le bloc de polyméthacrylate de butyle et le bloc de polystyrène.

**EXEMPLE 7 (COMPARATIF)**

**TENTATIVE DE PREPARATION D'UN COPOLYMERE A BLOCS POLYSTYRENE/PO-LYMETHACRYLATE DE BUTYLE, EN PRESENCE D'UNE FORTE CONCENTRATION EN TEMPO.**

Dans un ballon en verre de 100 ml sous atmosphère d'azote, muni d'une agitation mécanique et d'un système de régulation thermique, sont introduits à température ambiante :

- 40 g de styrène (soit 0,384 mole),
- 0,775 g de peroxyde de benzoyle (soit $3,22.10^{-3}$ mole),
- 0,5 g de Tempo (soit $3,2.10^{-3}$ mole).

Le mélange réactionnel d'abord porté à 95°C pendant 3,5 heures et est ensuite porté à 143°C. L'instant pour lequel le mélange réactionnel atteint la température de 143°C est défini comme l'instant de départ de l'essai. Au bout de 32 heures, 83 % de conversion sont obtenus. La masse moléculaire moyenne en nombre est de 9 200 pour un indice de polymolécularité de 1,7.

Tout en maintenant la température du mélange réactionnel à 143°C, 30 g de méthacrylate de butyle sont additionnés. En 10 heures d'agitation, la viscosité du mélange n'évolue pas. Un prélèvement est ensuite réalisé afin d'être analysé par GPC. L'analyse GPC montre que le polystyrène réalisé lors de la première étape, n'a pas évolué lors de la seconde étape (chauffage en présence de méthacrylate de butyle).

Ensuite, le mélange réactionnel est solubilisé dans du THF (dans environ 10 fois la masse de polymère obtenu) puis est précipité dans 100 volumes de méthanol. Une analyse par spectroscopie Infra-rouge et par RMN du proton montre qu'il n'y a pas de séquence méthacrylate dans le polymère final.

## Revendications

1. Procédé de préparation d'un polymère ou copolymère comprenant une étape de polymérisation ou copolymérisation d'au moins un monomère polymérisable par voie radicalaire, en présence d'un amorceur de polymérisation ou copolymérisation et d'un radical libre stable, ladite étape étant telle que pour 100 moles de monomère, les relations suivantes sont vérifiées :

$$\frac{F_{SFR} \text{ x (SFR)}}{F_{AMO} \text{ x (AMO)}} < 0{,}15$$

et

$$F_{SFR} \text{ x (SFR)} < 0{,}2 \text{ mole,}$$

dans lesquelles

- (SFR) représente le nombre de mole de radical libre stable dans le milieu de polymérisation ou copolymérisation,
- $F_{SFR}$ représente la fonctionnalité du radical libre stable, c'est-à-dire le nombre de sites sur la même molécule de radical libre stable présentant l'état de radical libre stable,
- (AMO) représente le nombre de mole d'amorceur de polymérisation ou copolymérisation dans le milieu de polymérisation ou copolymérisation,
- $F_{AMO}$ représente la fonctionnalité de l'amorceur, c'est-à-dire le nombre de sites présentant l'état de radical

libre que chaque molécule d'amorceur est capable de générer.

2. Procédé selon la revendication 1 **caractérisé en ce que** l'étape est telle que la relation suivante est vérifiée :

$$0{,}0005 < \frac{F_{SFR} \times (SFR)}{F_{AMO} \times (AMO)} < 0{,}15$$

3. Procédé selon la revendication 2 **caractérisé en ce que** l'étape est telle que la relation suivante est vérifiée :

$$0{,}005 < \frac{F_{SFR} \times (SFR)}{F_{AMO} \times (AMO)} < 0{,}1$$

4. Procédé selon la revendication 3 **caractérisé en ce que** l'étape est telle que la relation suivante est vérifiée :

$$0{,}005 < \frac{F_{SFR} \times (SFR)}{F_{AMO} \times (AMO)} < 0{,}05$$

5. Procédé selon l'une des revendications 1 à 4, **caractérisé en ce que** l'étape est telle que pour 100 moles de monomère, $F_{AMO}$ x (AMO) va de 0,01 à 20 moles.

6. Procédé selon la revendication 5 **caractérisé en ce que** l'étape est telle que pour 100 moles de monomère, $F_{AMO}$ x (AMO) va de 0,1 à 2 moles.

7. Procédé selon l'une des revendications précédentes **caractérisé en ce que** l'étape est telle que pour 100 moles de monomère, $F_{SFR}$ x (SFR) va de 0,0001 à 0,2.

8. Procédé selon la revendication 7 **caractérisé en ce que** l'étape est telle que pour 100 moles de monomère, $F_{SFR}$ x (SFR) va de 0,0005 à 0,1.

9. Procédé selon l'une des revendications précédentes **caractérisé en ce que** l'étape du procédé selon l'invention est menée en présence d'un solvant à raison de 0 à 20 % en poids de la somme de la masse de monomère et de solvant.

10. Procédé selon la revendication 9 **caractérisé en ce que** l'étape du procédé selon l'invention est menée en présence d'un solvant à raison de 0 à 10 % en poids de la somme de la masse de monomère et de solvant.

11. Procédé selon la revendication 10 **caractérisé en ce que** l'étape du procédé selon l'invention est menée en l'absence de solvant.

12. Procédé selon l'une des revendications précédentes **caractérisé en ce que** l'étape est menée de 100 à 250°C.

13. Procédé selon la revendication 12 **caractérisé en ce que** l'étape est menée de 130 à 200°C.

14. Procédé selon l'une des revendications précédentes **caractérisé en ce que** l'étape est menée avec un taux de conversion de monomère supérieur à 50 %.

15. Procédé selon la revendication 14 **caractérisé en ce que** l'étape est menée avec un taux de conversion de monomère supérieur à 90 %.

16. Procédé selon l'une des revendications précédentes **caractérisé en ce que** la température lors de l'étape et **en ce que** l'amorceur, sont choisis de sorte que le temps de demi-vie de l'amorceur à ladite température, aille de 30 secondes à 1 heure.

17. Procédé selon la revendication 16 **caractérisé en ce que** le temps de demi-vie de l'amorceur à la température choisie, aille de 5 minutes à 30 minutes.

**18.** Procédé selon l'une des revendications précédentes **caractérisé en ce que** l'amorceur est choisi parmi les peroxydes de diacyle, les peroxydes de dialkyle, les peroxyacétals.

**19.** Procédé selon l'une des revendications précédentes **caractérisé en ce qu'**au moins un monomère est de la famille des méthacrylates.

**20.** Procédé selon l'une des revendications précédentes **caractérisé en ce qu'**au moins un monomère est un méthacrylate de butyle.

**21.** Procédé de préparation d'un polymère à blocs comprenant une étape selon l'une des revendications 1 à 20 menant à la formation d'un premier bloc vivant, suivi de la formation d'au moins un bloc d'un monomère différent de celui utilisé pour ladite étape.

**22.** Procédé de préparation d'un polymère dibloc comprenant une étape selon l'une des revendications 1 à 20 menant à un premier bloc vivant d'un premier monomère, suivie d'une étape au cours de laquelle le premier bloc vivant est placé en présence d'un second monomère que l'on polymérise de façon à former un second bloc accolé au premier bloc.

**23.** Procédé de préparation d'un polymère tribloc comprenant une étape de polymérisation d'un troisième monomère en présence du polymère dibloc préparé par le procédé de la revendication 22, de façon à former un troisième bloc accolé au polymère dibloc.

**24.** Procédé selon l'une des revendications 21 à 23 **caractérisé en ce qu'**entre la formation de deux blocs, la température est au moins égale à la plus basse température utilisée pour réaliser l'un des deux blocs.

**25.** Procédé selon l'une des revendications 21 à 23 **caractérisé en ce qu'**entre la formation de deux blocs, la température reste au moins égale à 100°C.

**26.** Procédé de préparation d'un polymère greffé comprenant une étape selon l'une des revendications 1 à 20 dans laquelle l'amorceur est un macroamorceur comprenant un polymère dont au moins un atome est capable de prendre une forme radicalaire capable d'amorcer la polymérisation d'un premier monomère pour former un premier bloc vivant greffé au polymère.

**27.** Procédé de préparation d'un polymère greffé par un copolymère dibloc comprenant une étape de polymérisation d'un second monomère en présence du polymère greffé par le procédé de la revendication 26.

**28.** Procédé selon l'une des revendications précédentes **caractérisé en ce qu'**il est mené au moins partiellement en extrudeuse.

**29.** Procédé selon la revendication 28 **caractérisé en ce que** toutes les étapes de polymérisation sont menées en extrudeuse.

## Claims

**1.** Process for the preparation of a polymer or copolymer comprising a step of polymerization or copolymerization of at least one monomer which can be polymerized via a radical route, in the presence of a polymerization or copolymerization initiator and of a stable free radical, the said step being such that, per 100 mol of monomer, the following relationships are confirmed:

$$\frac{F_{SFR} \times (SFR)}{F_{INIT} \times (INIT)} < 0.15$$

and

$$F_{SFR} \times (SFR) < 0.2 \text{ mol},$$

in which

- (SFR) represents the number of moles of stable free radical in the polymerization or copolymerization medium,
- $F_{SFR}$ represents the functionality of the stable free radical, i.e. the number of sites on the same stable free radical molecule in stable free radical form,
- (INIT) represents the number of moles of polymerization or copolymerization initiator in the polymerization or copolymerization medium,
- $F_{INIT}$ represents the functionality of the initiator, i.e. the number of sites in free radical form which each initiator molecule is capable of generating.

**2.** Process according to Claim 1, **characterized in that** the step is such that the following relationship is confirmed:

$$0.0005 < \frac{F_{SFR} \times (SFR)}{F_{INIT} \times (INIT)} < 0.15$$

**3.** Process according to Claim 2, **characterized in that** the step is such that the following relationship is confirmed:

$$0.005 < \frac{F_{SFR} \times (SFR)}{F_{INIT} \times (INIT)} < 0.1$$

**4.** Process according to Claim 3, **characterized in that** the step is such that the following relationship is confirmed:

$$0.005 < \frac{F_{SFR} \times (SFR)}{F_{INIT} \times (INIT)} < 0.05$$

**5.** Process according to one of Claims 1 to 4, **characterized in that** the step is such that, per 100 mol of monomer, $F_{INIT} \times$ (INIT) ranges from 0.01 to 20 mol.

**6.** Process according to Claim 5, **characterized in that** the step is such that, per 100 mol of monomer, $F_{INIT} \times$ (INIT) ranges from 0.1 to 2 mol.

**7.** Process according to one of the preceding claims, **characterized in that** the step is such that, per 100 mol of monomer, $F_{SFR} \times$ (SFR) ranges from 0.0001 to 0.2.

**8.** Process according to Claim 7, **characterized in that** the step is such that, per 100 mol of monomer, $F_{SFR} \times$ (SFR) ranges from 0.0005 to 0.1.

**9.** Process according to one of the preceding claims, **characterized in that** the step of the process according to the invention is carried out in the presence of a solvent in a proportion of from 0 to 20% by weight of the sum of the mass of monomer and solvent.

**10.** Process according to Claim 9, **characterized in that** the step of the process according to the invention is carried out in the presence of a solvent in a proportion of from 0 to 10% by weight of the sum of the mass of monomer and solvent.

**11.** Process according to Claim 10, **characterized in that** the step of the process according to the invention is carried out in the absence of solvent.

**12.** Process according to one of the preceding claims, **characterized in that** the step is carried out at from 100 to 250°C.

**13.** Process according to Claim 12, **characterized in that** the step is carried out at from 130 to 200°C.

**14.** Process according to one of the preceding claims, **characterized in that** the step is carried out with a degree of conversion of monomer of greater than 50%.

15. Process according to Claim 14, **characterized in that** the step is carried out with a degree of conversion of monomer of greater than 90%.

16. Process according to one of the preceding claims, **characterized in that** the temperature during the step and **in that** the initiator are chosen such that the half-life of the initiator at the said temperature ranges from 30 seconds to 1 hour.

17. Process according to Claim 16, **characterized in that** the half-life of the initiator at the chosen temperature ranges from 5 minutes to 30 minutes.

18. Process according to one of the preceding claims, **characterized in that** the initiator is chosen from diacyl peroxides, dialkyl peroxides and peroxyacetals.

19. Process according to one of the preceding claims, **characterized in that** at least one monomer is from the methacrylate family.

20. Process according to one of the preceding claims, **characterized in that** at least one monomer is a butyl methacrylate.

21. Process for the preparation of a block polymer comprising a step according to one of Claims 1 to 20, leading to the formation of a first living block, followed by the formation of at least one block of a monomer which is different from the one used for the said step.

22. Process for the preparation of a diblock polymer, comprising a step according to one of Claims 1 to 20, leading to a first living block of a first monomer, followed by a step during which the first living block is placed in the presence of a second monomer which is polymerized, so as to form a second block attached to the first block.

23. Process for the preparation of a triblock polymer comprising a step of polymerization of a third monomer in the presence of the diblock polymer prepared by the process of Claim 22, so as to form a third block attached to the diblock polymer.

24. Process according to one of Claims 21 to 23, **characterized in that**, between the formation of two blocks, the temperature is at least equal to the lower temperature used to produce one of the two blocks.

25. Process according to one of Claims 21 to 23, **characterized in that**, between the formation of two blocks, the temperature remains at least equal to 100°C.

26. Process for the preparation of a grafted polymer comprising a step according to one of Claims 1 to 20, in which step the initiator is a macroinitiator comprising a polymer in which at least one atom is capable of taking a radical form capable of initiating the polymerization of a first monomer in order to form a first living block grafted to the polymer.

27. Process for the preparation of a polymer grafted with a diblock copolymer, comprising a step of polymerization of a second monomer in the presence of the polymer grafted by the process of Claim 26.

28. Process according to one of the preceding claims, **characterized in that** it is carried out at least partially in an extruder.

29. Process according to Claim 28, **characterized in that** all of the polymerization steps are carried out in an extruder.

**Patentansprüche**

1. Verfahren zur Herstellung eines Polymers oder Copolymers, umfassend einen Verfahrensschritt der Polymerisation oder Copolymerisation mindestens eines auf radikalischem Weg polymerisierbaren Monomers in Gegenwart eines Polymerisations- oder Copolymerisationsstarters und eines stabilen freien Radikals, wobei dieser Verfahrensschritt derart ist, daß pro 100 mol des Monomers die folgenden Gleichungen

$$\frac{F_{SFR} \text{ x (SFR)}}{F_{AMO} \text{ x (AMO)}} < 0{,}15$$

und

$$F_{SFR} \text{ x (SFR)} < 0{,}2 \text{ mol,}$$

erfüllt sind, wobei

- (SFR) die Molanzahl des stabilen freien Radikals in dem Polymerisations- oder Copolymerisationsmilieu darstellt,
- $F_{SFR}$ die Funktionalität des stabilen freien Radikals darstellt, d. h. die Anzahl der Stellen auf demselben Molekül des stabilen freien Radikals im Zustand des stabilen freien Radikals,
- (AMO) die Molanzahl an Polymerisations- oder Copolymerisationsstarter in dem Polymerisations- oder Copolymerisationsmilieu darstellt,
- $F_{AMO}$ die Funktionalität des Starters darstellt, d. h. die Anzahl der Stellen im Zustand des freien Radikals, die jedes Startermolekül zu generieren imstande ist.

**2.** Verfahren nach Anspruch 1, **dadurch gekennzeichnet, daß** der Verfahrensschritt derart ist, daß die folgende Gleichung erfüllt ist:

$$0{,}0005 < \frac{F_{SFR} \text{ x (SFR)}}{F_{AMO} \text{ x (AMO)}} < 0{,}15.$$

**3.** Verfahren nach Anspruch 2, **dadurch gekennzeichnet, daß** der Verfahrensschritt derart ist, daß die folgende Gleichung erfüllt ist:

$$0{,}005 < \frac{F_{SFR} \text{ x (SFR)}}{F_{AMO} \text{ x (AMO)}} < 0{,}1.$$

**4.** Verfahren nach Anspruch 3, **dadurch gekennzeichnet, daß** der Verfahrensschritt derart ist, daß die folgende Gleichung erfüllt ist:

$$0{,}405 < \frac{F_{SFR} \text{ x (SFR)}}{F_{AMO} \text{ x (AMO)}} < 0{,}05.$$

**5.** Verfahren nach einem der Ansprüche 1 bis 4, **dadurch gekennzeichnet, daß** der Verfahrensschritt derart ist, daß auf 100 mol des Monomers $F_{AMO}$ x (AMO) von 0,01 bis 20 mol reicht.

**6.** Verfahren nach Anspruch 5, **dadurch gekennzeichnet, daß** der Verfahrensschritt derart ist, daß auf 100 mol des Monomers $F_{AMO}$ x (AMO) von 0,1 bis 2 mol reicht.

**7.** Verfahren nach einem der vorangehenden Ansprüche, **dadurch gekennzeichnet, daß** der Verfahrensschritt derart ist, daß auf 100 mol des Monomers $F_{SFR}$ x (SFR) von 0,0001 bis 0,2 reicht.

**8.** Verfahren nach Anspruch 7, **dadurch gekennzeichnet, daß** der Verfahrensschritt derart ist, daß auf 100 mol des Monomers $F_{SFR}$ x (SFR) von 0,0005 bis 0,1 reicht.

**9.** Verfahren nach einem der vorangehenden Ansprüche, **dadurch gekennzeichnet, daß** der Verfahrensschritt des erfindungsgemäßen Verfahrens in Gegenwart eines Lösemittels in Mengen von 0 bis 20 Gew.-% der Summe der

Masse von Monomer und Lösemittel durchgeführt wird.

**10.** Verfahren nach Anspruch 9, **dadurch gekennzeichnet, daß** der Verfahrensschritt des erfindungsgemäßen Verfahrens in Gegenwart eines Lösemittels in Mengen von 0 bis 10 Gew.-% der Summe der Masse von Monomer und Lösemittel durchgeführt wird.

**11.** Verfahren nach Anspruch 10, **dadurch gekennzeichnet, daß** der Verfahrensschritt des erfindungsgemäßen Verfahrens in Abwesenheit eines Lösemittels durchgeführt wird.

**12.** Verfahren nach einem der vorangehenden Ansprüche, **dadurch gekennzeichnet, daß** der Verfahrensschritt bei 100 bis 250 °C durchgeführt wird.

**13.** Verfahren nach Anspruch 12, **dadurch gekennzeichnet, daß** der Verfahrensschritt bei 130 bis 200 °C durchgeführt wird.

**14.** Verfahren nach einem der vorangehenden Ansprüche, **dadurch gekennzeichnet, daß** der Verfahrensschritt mit einer Umsetzung in bezug auf das Monomer von mehr als 50 % durchgeführt wird.

**15.** Verfahren nach Anspruch 14, **dadurch gekennzeichnet, daß** der Verfahrensschritt mit einer Umsetzung in bezug auf das Monomer von mehr als 90 % durchgeführt wird.

**16.** Verfahren nach einem der vorangehenden Ansprüche, **dadurch gekennzeichnet, daß** die Temperatur bei dem Verfahrensschritt und der Starter derart gewählt sind, daß die Halbwertzeit des Starters bei dieser Temperatur 30 Sekunden bis 1 Stunde beträgt.

**17.** Verfahren nach Anspruch 16, **dadurch gekennzeichnet, daß** die Halbwertzeit des Starters bei der gewählten Temperatur 5 Minuten bis 30 Minuten beträgt.

**18.** Verfahren nach einem der vorangehenden Ansprüche, **dadurch gekennzeichnet, daß** der Starter ausgewählt ist aus Diacylperoxiden, Dialkylperoxiden und Peroxyacetalen.

**19.** Verfahren nach einem der vorangehenden Ansprüche, **dadurch gekennzeichnet, daß** mindestens ein Monomer aus der Familie der Methacrylate stammt.

**20.** Verfahren einem der vorangehenden Ansprüche, **dadurch gekennzeichnet, daß** mindestens ein Monomer Butylmethacrylat ist.

**21.** Verfahren zur Herstellung eines Blockpolymers umfassend einen Verfahrensschritt nach einem der Ansprüche 1 bis 20, der zur Bildung eines ersten lebenden Blocks führt, gefolgt von der Bildung mindestens eines Blocks eines Monomers, das von demjenigen, welches für diesen Verfahrensschritt eingesetzt wird, verschieden ist.

**22.** Verfahren zur Herstellung eines Zweiblockpolymers, umfassend einen Verfahrensschritt nach einem der Ansprüche 1 bis 20, der zu einem ersten lebenden Block eines ersten Monomers führt, gefolgt von einem Verfahrensschritt, während dem der erste lebende Block mit einem zweiten Monomer zusammengebracht wird, das man derart polymerisiert, daß sich ein zweiter Block bildet, der an den ersten Block angehängt ist.

**23.** Verfahren zur Herstellung eines Dreiblockpolymers, umfassend einen Verfahrensschritt der Polymerisation eines dritten Monomers in Gegenwart des Zweiblockpolymers, welches durch das Verfahren nach Anspruch 22 hergestellt worden ist, derart, daß sich ein dritter Block bildet, der an das Zweiblockpolymer angehängt ist.

**24.** Verfahren nach einem der Ansprüche 1 bis 23, **dadurch gekennzeichnet, daß** zwischen der Bildung der zwei Blöcke die Temperatur mindestens gleich der niedrigsten Temperatur ist, die zur Herstellung einer der zwei Blöcke verwendet wird.

**25.** Verfahren nach einem der Ansprüche 1 bis 23, **dadurch gekennzeichnet, daß** zwischen der Bildung der zwei Blöcke die Temperatur mindestens bei 100 °C bleibt.

**26.** Verfahren zur Herstellung eines gepfropften Polymers (Pfropfpolymers), umfassend einen Verfahrensschritt nach

einem der Ansprüche 1 bis 20, wobei der Starter ein Makrostarter ist, der ein Polymer umfaßt, von dem mindestens ein Atom imstande ist, eine radikalische Form anzunehmen, welche die Polymerisation eines ersten Monomers zu starten imstande ist, um einen ersten lebenden Block zu bilden, der auf das Polymer gepfropft wird.

**27.** Verfahren zur Herstellung eines gepfropften Polymers mittels eines Zweiblockcopolymers, umfassend einen Verfahrensschritt der Polymerisation eines zweiten Monomers in Gegenwart eines Polymers, das durch das Verfahren nach Anspruch 26 gepfropft worden ist.

**28.** Verfahren nach einem der vorangehenden Ansprüche, **dadurch gekennzeichnet, daß** es zumindest teilweise in einem Extruder (Extrusionsvorrichtung) durchgeführt wird.

**29.** Verfahren nach Anspruch 28, **dadurch gekennzeichnet, daß** alle Polymerisationsverfahrensschritte in einem Extruder durchgeführt werden.